# EUROPÄISCHE PATENTANMELDUNG

(11) **EP 4 235 942 A1**
(43) Veröffentlichungstag der Anmeldung: **30.08.2023**
(21) Anmeldenummer: 22158297.6
(22) Anmeldetag: 23.02.2022
(51) Int. Cl.: H01M 50/51, H01M 4/38, H01M 6/52, H01M 12/06, H01M 50/664, H01M 50/691, H01M 4/66, H01M 4/90, H01M 6/50, H01M 50/138, H01M 50/209

(54) **PRIMÄRZELLE UMFASSEND ANODENSTAPEL, INSBESONDERE METALL-LUFT PRIMÄRZELLE**

(71) Anmelder: Evonik Operations GmbH, 45128 Essen (DE)
(72) Erfinder: Die Erfindernennung liegt noch nicht vor
(74) Vertreter: Evonik Patent Association

(57) **Zusammenfassung**

Gegenstand der Erfindung ist eine Primärzelle (0), insbesondere eine Metall-Luft-Primärzelle, mit Anode (A), Kathode (B) sowie mindestens einem Separator (S), der Anode (A) und Kathode (B) trennt, wobei eine Anode (A) in Form eines Anodenstapels (2) von Anodenplatten (2.1) vorliegt und die Kathode (B) eine Luftkathode ist. Der Elektrolyt der Primärzelle ist während des Betreibes der Primärzelle austauschbar. Ferner ist Gegenstand der Erfindung eine mehrzellige Batterie umfassend mindestens zwei bis 15.000 mit einander verbundene Primärzellen.

## Beschreibung

Gegenstand der Erfindung ist eine Primärzelle, insbesondere eine Metall-Luft-Primärzelle, mit Anode (A), Kathode (B) sowie mindestens einem Separator (S), der Anode (A) und Kathode (B) trennt, wobei eine Anode (A) in Form eines Anodenstapels von Anodenplatten vorliegt und die Kathode (B) eine Luftkathode ist. Der Elektrolyt der Primärzelle ist während des Betriebes der Primärzelle austauschbar. Ferner ist Gegenstand der Erfindung eine mehrzellige Batterie umfassend mindestens zwei bis 15.000 mit einander verbundene Primärzellen.

Aufgrund des zunehmenden Bedarfes an E-Mobility im Personennahverkehr durch Elektroautos, Elektrofahrräder sowie elektrisch betriebene Busse etc. als auch bei zunehmender dezentraler Stromgewinnung besteht ein enormer Bedarf an umweltverträglichen Batterien, deren Komponenten einerseits unbeschränkt verfügbar und andererseits unbeschränkt recyclebar, umweltverträglich und/oder weiter verwendbar sein sollen. Silizium ist ein auf der Erde unbegrenzt verfügbarer Rohstoff. Darüber hinaus müssen die Komponenten einer Batterie kostengünstig verfügbar sein.

Des Weiteren ist es bekannt, durch ständige Zufuhr eines Brennstoffes in Brennstoffzellen, die eine galvanische Zelle aufweisen, in Gegenwart eines Oxidationsmittels elektrische Energie zu erzeugen. Grundsätzlich ist dieses Prinzip auch für Silizium-Luft-Batterien denkbar. Zudem sind übliche Silizium enthaltende Lithium-Ionen-Sekundärbatterien täglich weltweit im Einsatz.

Aufgabe der Erfindung war es eine elektrochemische Primärzelle, insbesondere einen Zellaufbau für eine elektrochemische Primärzelle, bereitzustellen, so dass die Primärzelle auf wirtschaftliche Weise, über einen längeren Zeitraum betrieben werden kann, obwohl eben eine Primärzelle bislang nur für den einmaligen Verbrauch genutzt wird. Denn Primärzellen verbrauchen sich bei der Entladung und können somit nicht wieder aufgeladen werden, wie dies für Akkumulatoren mit Sekundärzellen bekannt ist. Daher soll die Primärzelle auf einfache Weise einen Aus- und Neueinbau einer neuen Anode ermöglichen, wenn eine zuvor eingebaute Anode verbraucht wurde. Aufgabe der Erfindung war es somit eine Primärzelle bereitzustellen, die ökologisch und ökonomisch sinnvoll wiederverwendet werden kann. Des Weiteren sollen Komponenten, die verbraucht sind, austauchbar sein. Daher sollen insbesondere die Anode und auch die Kathode austauschbar sein. Des Weiteren soll die Primärzelle über einen längeren Zeitraum betrieben werden können, so dass auch die chemisch-physikalischen Bedingungen in der Primärzelle von außen gesteuert werden können. Somit soll von außen mittels einer Steuerung Einfluss auf die chemische Zusammensetzung des Elektrolyten in der Primärzelle als auch auf die Temperatur genommen werden können. Des Weiteren soll es möglich sein den fluiden Inhalt, i.d.R. Elektrolyt im Hohlraum eines Anodengehäuses auszutauschen. Durch die vorgenannten Aufgaben wird angestrebt die Anoden aus einem Recycling Material bereitstellen zu können. Zudem soll der Elektrolyt vorzugsweise im verbrauchten Zustand selbst einem Recycling ggf. mit einer Aufbereitung zugängig sein.

Die vorgenannten Aufgaben wurden durch eine Primärzelle nach Anspruch 1 sowie eine mehrzellige Batterie nach Anspruch 15 gelöst. Die Erfindung ist in den Unteransprüchen sowie in der Beschreibung detailliert beschrieben.

Gegenstand der Erfindung ist eine Primärzelle, insbesondere eine elektrochemische Primärzelle, besonders bevorzugt eine Metall-Luft-Primärzelle, umfassend mindestens eine Anode, mindestens eine Kathode, die eine Luftkathode ist, die vorzugsweise jeweils eine Luftkathode ist, sowie mindestens einen Separator, insbesondere je Kathode, wobei der Separator Anode von Kathode separiert, und wobei eine Anode in Form eines Anodenstapels von Anodenplatten vorliegt.

Eine erfindungsgemäße Primärzelle umfasst ein Anodengehäuse in dem die mindestens eine Anode A angeordnet ist und an dem mindestens zwei Kathoden B, insbesondere zwei Luftkathoden B angeordnet sind. Dabei erfolgt eine Luftzufuhr von der Oberseite des Anodengehäuses. Ein optionales Elektrolytmanagement erfolgt vorzugsweise durch Leitungen an der Unterseite des Anodengehäuses.

Ein erfindungsgemäßer Anodenstapel umfasst vorzugsweise 2 bis 1000 Anodenplatten, besonders bevorzugt 5 bis 200 Anodenplatten, besonders bevorzugt 10 bis 200. Des Weiteren ist es bevorzugt, wenn die Anodenplatten des Anodenstapels aus Silizium oder einer Siliziumlegierung gebildet sind oder zumindest mehr als 50 Gew.-%, bevorzugt mehr als 90 Gew.-% der Gesamtzusammensetzung von 100 Gew.-% der Anodenplatte bilden. In die Gesamtzusammensetzung werden keine elektrisch leitenden Materialien mit einer elektrischen Leitfähigkeit von größer gleich 10 S/m (271 K) eingerechnet. In die Gesamtzusammensetzung der Anodenplatten wird ein in der Anodenplatte integrierter Stromsammler nicht eingerechnet. Als ein Stromsammler gilt ein elektrischer Leiter aus einem elektrisch leitenden Material, insbesondere umfassend Eisen, Eisenlegierung, Kupfer, Kupferlegierung, Aluminium, Aluminiumlegierung oder ein anderweitiges elektrisch leitendes Material umfassend metallische Legierungen mit einer elektrischen Leitfähigkeit von größer gleich 10 S/m (271 K), optional mit einem Gehalt an Kohlenstoff, oder Mischungen enthaltend diese. Als elektrischer Leiter gilt ein Material mit einer elektrischen Leitfähigkeit (σ) von größer gleich 10 S/m (271 K). Ein Stromsammler kann in verschiedenen Leiterklassen vorliegen, Übliche Leiterklassen umfassen Leiterklassen 1 bis 6. Alternativ kann ein Stromsammler als Netz, Gewebe oder Vlies vorliegen.

Die Anodenplatten gemäß der Erfindung können umfassen Scheiben, flächige Gebilde, flächige Polyeder, flächige Prismen, Zylinder oder sonstige flächige Elemente. Eine bevorzugte Anodenplatte weist Seitenflächen auf, die eine Vorderseite und eine der Vorderseite gegenüberliegende Rückseite aufweisen sowie mindestens eine die Vorder- und Rückseite verbindende mindestens eine seitliche Seitenfläche, insbesondere mindestens eine umlaufende Seitenfläche. Vorder- und Rückseite weisen eine ausgedehntere Oberfläche auf als eine jeweilige Seitenfläche. In einer besonders bevorzugten Ausführungsform ist eine Anodenplatte ein Quader mit rechteckiger Vorder- und Rücksseite sowie vier rechteckigen die Vorder- und Rückseite der Anodenplatte verbindenen Seitenflächen. Alternativ kann eine Anodenplatte eine Scheibe mit primatischer Geometrie sein. Als flächig gilt eine Anode, wenn die Höhe der Seitenfläche mindestens die Hälfte einer Seitenkante der Vorder- und/oder Rückseite beträgt, bevorzugt beträgt die Höhe kleiner 1/10 einer Seitenkante der Vorder- und/oder Rückseite einer Anode, insbesondere Anodenplatte.

Im Anodenstapel liegen die Anodenplatten jeweils parallel voneinander, um eine definierte Distanz voneinander beabstandet vor. Dabei sind jeweils benachbarte Anodenplatten an ihren Vorder- und Rückseiten jeweils voneinander beabstandet zu einem Anodenstapel angeordnet. Bevorzugt sind die Vorder- und Rückseiten der Anodenplatten im Anodenstapel von einander im Wesentlichen gleichmäßig voneinander beabstandet. Die Distanz zwischen den Vorder- und Rückseiten benachbarter Anodenplatten kann im Bereich von 0,1 mm bis 5 cm betragen, bevorzugt von 1 mm bis 5 mm. Der Abstand der Anodenplatten im Anodenstapel soll einen ausreichenden Elektrolytaustausch im Bereich zwischen den Anodenplatten gewährleisten, so dass die Leistung der Primärzelle nicht durch Diffusionsvorgänge limitiert wird. Um eine ausreichende Konvektion oder Umströmung der Oberfläche, insbesondere der Vorder- und Rückseite der Anodenplatten zu gewährleisten weist die Primärzelle zudem eine Elektrolytzu- und -abführung auf, die es ermöglicht einen Austausch des Elektrolyten ggf. unter laminarer oder turbulenter Strömung zu ermöglichen.

Ein weiterer Vorteil der Anodenplatten der Erfindung ist, dass durch den Aufbau der Primärzelle grundsätzlich die innere und äußere Geometrie der Anoden flexibel wählbar sind. So ist Gegenstand der Erfindung eine Anode aus Silizium, insbesondere Anodenplatte(n) die umfassen Silizium-Anodenplatten, wobei die Silizium-Anodenplatten umfassen oder gebildet wurden aus
i) Silizium-Partikel, insbesondere umfassend Silziumpartikel oder Partikel einer Siliziumlegierung oder Mischungen davon, und/oder
ii) ein Trägergerüst, welches gebildet ist aus stoffschlüssig miteinander verbundenen Silizium-Partikeln, insbesondere wobei die Silizium-Primärpartikel eine Partikelgröße zwischen 1 nm bis 500 Mikrometer, bevorzugt 1 nm bis 30 000 nm aufweisen, und die Silizium-Primärpartikel optional im Wesentlichen kristallin, polykristallin und/oder amorph sind,
iii) einem Schwamm, d.h. einer schwammartigen oder geschäumten Struktur, umfassend Silizium, insbesondere umfassen Siliziumschwamm oder Schwamm mindestens einer Silizium-Legierung und/oder eine geschäumte Struktur umfassend Silizium, und/oder
iv) einen dreidimensionalen Formkörper mit äußerer Oberfläche und innerer Oberfläche, wobei der dreidimensionale Formkörper umfasst Siliziumpartikel und/oder Siliziumfaser und/oder Siliziumstäbe, insbesondere Silizium-Partikel einer Partikelgröße von 1 bis 5000 Mikrometer, insbesondere von 1 nm bis 20 Mikrometer, wobei die Siliziumpartikel an Kontaktpunkten zu benachbarten Siliziumpartikeln stoffschlüssig, insbesondere mittels des Matrixmaterials, vorzugsweise Silizium, miteinander verbunden sind.

Eine Anode, insbesondere eine Anodenplatte kann eine Dichte von 0,1 g/cm³ bis 2,3 g/cm³, vorzugsweise eine Dichte von 0,9 g/cm³ bis 2,2 g/cm³ aufweisen. Des Weiteren ist es bevorzugt, wenn die flächigen Anoden, insbesondere Anodenplatten im Wesentlichen eine planare Vorder- und Rückseite aufweisen.

Dabei ist es bevorzugt, wenn in den Silizium-Anodenplatten a) die Siliziumpartikel oder die b) stoffschlüssig miteinander verbundenen Silizium-Partikel und/oder c) die an Kontaktpunkten verbundenen Siliziumpartikel miteinander i) verschmolzen und/oder ii) versintert und/oder iii) verpresst sind.

Dabei ist es bevorzugt, wenn das Anodenmaterial im geladenen Zustand kein Lithium umfasst. Bevorzugte Primärzellen, insbesondere Anoden, Anodenstapel und/oder Anodenplatten der Erfindung sind vorzugsweise frei von Lithium, wobei vorzugsweise wird unter frei von Lithium verstanden, dass der Gehalt an Lithium im geladenen Zustand in der Primärzelle, insbesondere umfassend die Anode, die Kathode und den Elektrolyten, kleiner gleich 1

Gew.-%, insbesondere kleiner gleich 0,1 Gew.-% in der Primärzelle beträgt, vorzugsweise beträgt der Gehalt an Lithium im Elektrodenmaterial der Anode im geladenen Zustand kleiner gleich 0,1 Gew.-%. Elektrochemische Primärzellen und insbesondere Anoden für elektrochemische Prozesse mit einem Lithiumgehalt unter 1 Gew.-%, vorzugsweise kleiner gleich 0,1 Gew.-%, gelten als frei von Lithium und könne erfindungsgemäß als reine Silizium-Zellen oder reine Silizium-Anoden bezeichnet werden. Insbesondere weist das Anodenmaterial diesen Gehalt sowohl im geladenen Zustand als auch während der Entladung auf.

Ein Trägergerüst kann Silizium umfassen aber auch Eisen enthaltendes Silizium bspw. Silizium mit einem Eisengehalt von 0,5 Gew.-% in der Gesamtzusammensetzung des Trägergerüstes und/oder der Silizium-Partikel aufweisen (Silizium 99%-ig; Gesamtzusammensetzung 100 Gew.-%). Silizium-Anodenplatten können ferner umfassen Silizium-Graphen Komposite oder Legierungen.

In bevorzugten Ausführungsformen weist eine oder die Anodenplatte(n) auf mindestens einem Anteil der jeweiligen Seitenfläche einer Anodenplatte, insbesondere auf der äußeren Oberfläche, eine elektrisch leitfähige Beschichtung oder Zusammensetzung auf, insbesondere einer i) elektrisch leitfähigen, metallischen Legierung oder eines Metalls zur elektrischen Kontaktierung, ii) eines elektrisch leitfähigen Polymers, iii) eines elektrisch leitfähigen Polymers umfassend Partikel oder Fasern von elektrisch leitenden Metallen oder Legierungen, wobei vorzugsweise die Leitfähigkeit des Polymers größer 10 S/m, bevorzugt größer 10⁴ S/m betragen soll, und/oder iv) elektrisch leitfähigen Zusammensetzungen, umfassend Kohlenstoff, v) Lot. Als Lote kommen Hart- und Weichlot in Betracht.

Dabei ist es bevorzugt, wenn der dreidimensionale Formkörper auf mindestens einem Teil seiner äußeren Oberfläche eine Beschichtung oder Zusammensetzung einer leitfähigen metallischen Legierung oder eines Metalls zur elektrischen Kontaktierung aufweist. Als Beschichtung oder Zusammensetzung gelten insbesondere elektrisch leitfähige Lote, wie Hart- oder Weichlot. Die Kontaktierung eines Anodenstapels kann bspw. erfolgen, indem der Anodenstapel auf eine Zusammensetzung, die an der Anodenhalterung vorliegt, eingedrückt wird. Diese Zusammensetzung kann ggf. aushärten, trocken und/oder getempert werden, um ggf. vorhandene Flussmittel, Harze, Wasser etc. zu verdampfen.

In weiteren bevorzugten Ausführungsformen weist eine oder weisen die Anodenplatte(n) auf mindestens einem Anteil der jeweiligen Seitenfläche einer Anodenplatte, insbesondere auf der äußeren Oberfläche, eine elektrisch leitfähige Beschichtung oder Zusammensetzung auf mindestens einem Anteil einer Seitenfläche eine elektrisch leitfähige Zusammensetzung auf, um eine stoffschlüssige und/oder formschlüssige Kontaktierung mit der Anodenhalterung zu ermöglichen, wobei die Zusammensetzung umfasst i) elektrisch leitfähige metallische Legierung oder ein Metall zur elektrischen Kontaktierung, ii) elektrisch leitfähiges Polymer, iii) elektrisch leitfähiges Polymer umfassend Partikel oder Fasern von elektrisch leitendem Metall oder Legierung, wobei die Leitfähigkeit bevorzugt größer 10 S/m, bevorzugt größer 10⁴ S/m betragen soll, iv) elektrisch leitfähige Zusammensetzung umfassend Kohlenstoff.

Das Anodenmaterial einer Anode, insbesondere die Anodenplatten, umfassen gemäß einer Alternative der Erfindung ein Anodenmaterial mit 20 bis 75 Gew.-%, vorzugsweise von 20 bis 60 Gew.-%, Silizium, insbesondere partikuläres Silizium, bevorzugt Silizium-Partikel, und einen Kohlenstoff enthaltenden Leitfähigkeitsvermittler, insbesondere von 25 bis 80 Gew.-%, bevorzugt von 40 bis 80 Gew.-%, und optional weitere Additive auf 100 Gew.-% des Anodenmaterials. Der Leitfähigkeitsvermittler umfasst vorzugsweise Kohlenstoff enthaltende Partikel, insbesondere einer Partikelgröße von 20 bis 100 nm, insbesondere 25 bis 80 nm. Ein besonders bevorzugtes Anodenmaterial der Anode umfasst zu 45 bis 55 Gew.-% Silizium-Partikel und zu 55 bis 45 Gew.-% einen Kohlenstoff enthaltenden Leitfähigkeitsvermittler, wobei die Gesamtzusammensetzung des Anodenmaterials 100 Gew.-% beträgt, insbesondere des Anodenmaterial ohne Elektrolyt, d.h. trockenes Anodenmaterial. Das Anodenmaterial kann Bindemittel wie Acrylat und/oder Cellolosen umfassen. Das Anodenmaterial kann als Formkörper vorliegen, der bspw. mittels eines Strangpressverfahrens zu einer Anode geformt wurde.

Bevorzugte elektrisch leitfähige Zusammensetzungen umfassend Kohlenstoff, umfassen Kohlenstoffmodifikationen, bevorzugt Graphen, Graphit, Leitruß und/oder Mischungen, bevorzugt umfasst die Zusammensetzung mindestens zwei der vorgenannten Komponenten. Des Weiteren weisen die vorgenannten Zusammensetzungen oder Lote bei deren Applikation ein Flussmittel auf. Als Lot kommen in Betracht Hart- oder Weichlot. Weichlote können aufgrund der niedrigeren Temperatur zur Ausbildung der Kontaktierung bevorzugt sein. Geeignete Lot können beispielsweise jene sein, die auch zur Kontaktierung bzw. Kontakte in Bremsflüssigkeiten oder in andere flüssigen Medien verwendet werden.

Elektrisch leitfähige iv) Zusammensetzungen umfassend Kohlenstoff können vorzugsweise umfassen mindestens eine Kohlenstoffmodifikation oder Gemische von Kohlenstoffmodifikationen, bevorzugt Graphen, Graphit, Leitruß und/oder Mischungen umfassend mindestens zwei vorgenannten Komponenten und optional leitfähige Polymere oder Bindemittel, wie Cellulose.

Die erfindungsgemäße Primärzelle umfasst ein Anodengehäuse, in dem die Anode A angeordnet ist. Das Anodengehäuse weist einen Elektrolyteinlass und einen Elektrolytauslass auf, um während dem Betrieb der Primärzelle oder im Stillstand den Elektrolyten ablassen, zuführen, austauschen, temperieren, verdünnen oder auf sonstige Art und Weise modifizieren zu können. Das Anodengehäuse weist einen Hohlraum zur Aufnahme eines Elektrolyten auf, wenn die Kathodenöffnungen durch Anordnung der Kathoden B am Anodengehäuse verschlossen sind. Die Kathodenöffnungen am Anodengehäuse werden mittels Dichtmittel fluiddicht nach außen bzw. gegen einen Austritt des Elektrolyten gesichert.

Das Anodengehäuse weist daher neben der Anodenöffnung zur Aufnahme der Anode A, in der, der Anodenöffnung gegenüberliegenden Seite des Anodengehäuses mindestens einen Elektrolyteinlass und/oder mindestens einen Elektrolytauslass auf.

Das Anodengehäuse umschließt vorzugsweise einen Hohlraum zur Aufnahme eines Elektrolyten, wenn die Kathodenöffnungen durch Anordnung der Kathoden B am Anodengehäuse verschlossen sind, die Kathodenöffnungen sind vorzugsweise an seitlichen Seitenflächen des Anodengehäuses, insbesondere einander gegenüberliegend angeordnet. Die Anodenöffnung ist im Anodengehäuse vorzugsweise auf der Oberseite des Anodengehäuses angeordnet. Besonders bevorzugt ist das Anodengehäuse Quaderförmig, mit auf der Oberseite angeordneter Anodenöffnung, mit mindestens ein bis 4 Kathodenöffnungen an den seitlichen Seitenflächen des Anodengehäuses und mit mindestens einem Elektrolyteinlass und einem Elektrolytauslass, wobei der mindestens eine Elektrolyteinlass und der mindestens eine Elektrolytauslass an der Unterseite des Anodengehäuses angeordnet sind. Die Kathodenöffnungen am Anodengehäuse werden vorzugsweise mittels Dichtmittel fluiddicht nach außen bzw. gegen einen Austritt des Elektrolyten gesichert.

Das Anodengehäuse weist daher vorzugsweise neben der Anodenöffnung zur Aufnahme der Anode A, in der, der Anodenöffnung gegenüberliegenden Seite des Anodengehäuses mindestens einen Elektrolyteinlass und/oder mindestens einen Elektrolytauslass auf. Diese Anordnung auf der den Anodenplatten gegenüberliegender Seite ermöglicht die Einstellung einer einmaligen bis ständigen und/oder gepulsten, guten und vorzugsweise homogene Anströmung der Anodenplatten mit Elektrolyten, wenn dies entsprechend gesteuert wird.

Das Anodengehäuse kann grundsätzlich jede sinnvolle Geometrie aufweisen. Bevorzugt weist das Anodengehäuse die Form eines Polyeders, bevorzugt im Wesentlichen eines Quaders, mit mindestens drei Seitenflächen auf, wobei eine Seitenfläche des Anodengehäuses eine Anodenöffnung zur Aufnahme der Anode A aufweist, dabei wird die Anodenöffnung durch den Gehäuseteil der Anoden (4) bei eingesetzter Anode (A) verschlossen. Ein bevorzugtes Anodengehäuse ist ein Quader ggf. mit abgerundeten Ecken mit sechs Seitenflächen.

In die Anodenöffnung kann die Anode A eingesetzt werden. Die Anode A wird vorzugsweise durch einen Anodenstapel umfassend Anodenplatten gebildet. Der Anodenstapel ist vorzugsweise an einem Gehäuseteil angeordnet, insbesondere ist der Anodenstapel an dem Gehäuseteil mittels einer Anodenhalterung befestigt, bevorzugt umfasst das Gehäuseteil mindestens einen Anodenanschluss. Der Anodenstapel weist größer zwei bis 200 Anodenplatten in gestapelter und voneinander beabstandeter Anordnung auf.

Des Weiteren weist das Anodengehäuse mindestens eine, vorzugsweise mindestens zwei Kathodenöffnungen auf, wobei an einer Kathodenöffnung je eine Kathode B angeordnet werden kann. Der Aufbau des Anodengehäuses erlaubt einen Austausch der Anode oder Kathode auf einfache Weise, so dass die Primärbatterie nach Verbrauch der Anode auf einfache Art und Weise zerlegt und wieder aufbereitet werden kann. Die beiden oder mehre Kathodenöffnungen sind vorzugsweise an seitlichen Flächen des Anodengehäuses angeordnet, während die Anodenöffnung in der Oberseite des Anodengehäuses angeordnet ist.

Somit ist Gegenstand der Erfindung eine Primärzelle, die gebildet wird durch ein Anodengehäuse mit Anodenöffnung zur Aufnahme der Anode A, wobei das Anodengehäuse mindestens zwei Kathodenöffnungen aufweist, wobei an je einer Kathodenöffnung je eine Kathode B angeordnet werden kann. Ferner weist das Anodengehäuse Elektrolyteinlässe und/oder Elektrolytauslässe auf, die vorzugsweise an der der Anodenöffnung gegenüberliegenden Unterseite des Anodengehäuses angeordnet sind. Grundsätzlich können diese Ein- und/oder Auslässe an jeder sinnvollen Seite des Anodengehäuses angeordnet sein. Daher können sie auch an der seitlichen Seitenfläche des Anodengehäuses im Bereich der Kathodenöffnungen oder unterhalb der Kathodenöffnungen vorgesehen sein. Für einen leichten Wechsel der verbrauchten Kathoden oder einer Reinigung des Anodengehäuses wird die Anbringung an der Unterseite des Anodengehäuses bevorzugt. Erfindungsgemäß ist die Kathode B eine Luftkathode. Die Kathode umfasst ein Kathodengehäuse, mindestens einen Kathodenanschluss, mindestens eine Öffnung für einen Austausch von Gas umfassend Sauerstoff, wie Luft und/oder Gasgemisch umfassend Sauerstoff. Das Kathodengehäuse weist mindestens drei Seitenflächen auf, insbesondere sechs Seitenflächen, insbesondere planare Seitenflächen, wobei eine Seitenfläche des Kathodengehäuses mindestens eine Kathodenöffnung aufweist, auf der, in der oder hinter der eine Kontaktplatte angeordnet werden kann oder, die mit einer Kontaktplatte als Teil des Kathodengehäuses versehen ist. Die Kontaktplatte kann gitterförmig, gelocht, gestanztes Blech, poröse Platte, gesinterte Platte und/oder eine Kontaktplatte mit Membran(en) sein. Grundsätzlich sind alle plattenartigen Elemente geeignet, die den Kontakt zwischen Elektrolyt und Kathodenmaterial herstellen können zu zugleich mechanisch das Kathodenmaterial im Kathodengehäuse fixieren. Optional weist die Kathode mindestens einen Kathodenanschluss auf. Das jeweilige Kathodengehäuse ist vorzugsweisequaderförmig. Die Primärzelle umfassend ein bis vier Kathodengehäuse ist vorzugsweise ebenfalls quaderförmig, um eine möglichst platzsparende Anordnung in einer mehrzelligen Batterie zu ermöglichen.

Besonders bevorzugt ist Anode A in der Anodenöffnung des Anodengehäuses fluiddicht angeordnet. Des Weiteren ist es bevorzugt, wenn auch die Kathoden B an den Kathodenöffnungen des Anodengehäuses fluiddicht angeordnet sind. Als fluiddicht wird eine Dichtigkeit der gebildeten Gehäusehülle verstanden, um eine Leckage des Elektrolyten zu vermeiden. Der einzufüllende Elektrolyt ist vorzugsweise ein wässriger stark alkalischer Elektrolyt.

Unter fluiddicht wird vorliegend verstanden, dass aus dem Anodengehäuse mit angeordneten Kathodengehäusen kein Elektrolyt unbeabsichtigt austreten kann, d.h. die Anoden- und Kathodenöffnungen sind fluiddicht, insbesondere durch Verwendung von Dichtungen, O-Ringen, dichtenden Rahmen, etc.

Der Separator ist zudem zwischen dem Anodengehäuse und den Kathodengehäusen angeordnet. Somit ist vorzugsweise der jeweilige Separator S in oder auf der jeweiligen Kathodenöffnung des Anodengehäuses und auf der Kontaktplatte der jeweiligen Kathode oder des jeweiligen Kathodengehäuses angeordnet und trennt die Anode A von der jeweiligen Kathode B. Die Anordnung ist fluiddicht, um ein Austreten des Elektrolyten aus den Gehäusen zu vermeiden. Aus der Primärzelle kann somit kein Fluid an diesen Öffnungen austreten kann. Die elektrisch leitende Verbindung zwischen Anode und Kathoden, insbesondere der Transport elektrischer Ladungsträger, wie Ionen, Elektronen, ist möglich.

Ein Separator, insbesondere ein Batterieseparator, in einer Alkali-Batteriezelle wird zum Trennen einer negativen Elektrode von einer positiven Elektrode verwendet, wenn sie in einem geeigneten Elektrolyten angeordnet sind. Neben der Trennung der Elektroden, d.h. Anode und Kathode, weist der Separator während des Betriebs der Zelle, wenn die normalen chemischen Reaktionen ablaufen, einen verhältnismäßig niedrigen Widerstand gegenüber der Elektrolytionenübertragung, jedoch einen beträchtlich hohen Widerstand gegenüber der Elektrodenionenübertragung auf.

Der Separator wird beispielsweise gebildet durch Aufbringen eines verbesserten Coatings auf ein Substrat. Bei dem Separator handelt es sich in der Regel um ein flexibles, faseriges und poröses Substrat, das gegen starkes Alkali und gegen Oxidation beständig ist. Der Separator kann ein Composite sein und kann vorzugsweise auf mindestens einem Polymer, wie Polyethylen, Polypropylen, Polyacrylat, Lingnocellulose, Cellulose und/oder Mikrozellulose basieren.

Die Coating- bzw. Überzugszusammensetzung des Separators umfasst beispielsweise eine Mischung aus einem polymeren Bindemittel, einem hydrolysierbaren polymeren Ester und inerten Füllstoffen. Ein geeignetes polymeres Bindemittel ist Ethylen-Propylen-Kautschuk. Ein geeigneter hydrolysierbarer Ester ist ein filmbildendes Polyacrylat. Bei den inerten Füllstoffen kann es sich unter anderem um ein in Alkali unlösliches Pigmentmaterial einschließlich Kaolin, Metalloxiden und/oder Titanaten handeln. Der auf diese Weise hergestellte bzw. beschichtete Separator in den alkalischen Elektrolyten eingetaucht wird, reagiert der hydrolysierbare polymere Ester chemisch mit dem Elektrolyten unter Bildung eines polymeren Salzes und eines Alkohols. Der Alkohol geht in Lösung. Das Salz, das während der Hydrolyse gebildet wird und in dem Überzug zurückgehalten wird, dehnt sich aus durch weiteres Eindringen des Elektrolyten. Diese Ausdehnungskräfte der Polymerketten des Bindemittels führen zu einer weiteren Ausdehnung und zu einer Vergrößerung des intermolekularen Abstandes. Die in einem größeren Abstand voneinander angeordneten intermolekularen Ketten des polymeren Bindemittels ergeben eine Gesamtzunahme der Porosität des Filmüberzugs. Die daraus resultierende Zunahme der Porosität des Überzugs erlaubt eine schnellere Diffusion der Elektrolyt-Ionen durch den Separator, während sie noch eine wesentliche Sperrschicht (Sperre) für die von den Elektroden emittierten großen Ionen darstellt.

Gleichfalls Gegenstand der Erfindung ist eine mehrzellige Batterie, wobei die Batterie mindestens zwei bis 15.000 mit einander verbundene Primärzellen umfasst, vorzugsweise sind die zwei bis 15.000 mit einander verbundenen Primärzellen in Serie geschaltet.

Die Anode ist vorzugweise frei von Lithium insbesondere im geladenen Zustand.

Gegenstand der Erfindung ist auch eine elektrochemische Primärzelle aufweisend eine Anode, eine Kathode, optional einen Elektrolyten sowie mindestens einen Separator, wobei der Separator die Kathode und die Anode voneinander separiert, und die Kathode vorzugsweise umfasst als Material Manganoxid und/oder Mangandioxid oder Nichtedelmetallkatalysator und optional Kohlenstoff enthaltenden Leitfähigkeitsvermittler, wobei die Anode als Anodenmaterial Silizium umfasst.

Nickel-Kobalt-Cyanide stehen beispielhaft für die Klasse von Nichtedelmetallkatalysatoren mit hervorragender Elektroaktivität für die Sauerstoffreduktionsreaktion im neutralen Elektrolyten. Die Zubereitung der Ni/Co-dotierten C-N-Hohl-Nanoröhren-Verbundkatalysatoren (C-N, Co/C-N, Ni/C-N und Ni-Co/C-N) erfolgt durch eine einfache Pyrolyse des Ni/Co-Salz~Dicyandiamid~Glucose~Gemenges. Eine entsprechende Silizium-Luft-Batterie wurde in einem neutralen Medium unter Verwendung der vorbereiteten Probe als Katalysator für die Luftelektrode montiert und zeigte eine hervorragende Entladungsleistung und Stabilität.

Gleichfalls kann eine Membran, insbesondere eine Gasdiffusionselektrode umfassend eine PTFE-Schicht, wie bspw. Von der Firma Gaskatel, eingesetzt werden. Die Gasdiffusionselektrode kann eine Membran und/oder ein Stahlgitter, vorzugsweise aus einem plattierten Stahldraht bspw. Nickelplattiert sein. Gleichfalls kann eine Gasdiffusionselektrode umfassend eine PTFE-Schicht, wie bspw. Von der Firma Gaskatel, eingesetzt werden. Gasdiffusionselektroden können alternativ Membranen aus den folgenden Materialien umfassen Ethylcellulose, Polyphenylenoxid, Polymethylpenten, modifziertes Poylcarbbonat, Cellulosetriacetat, Celluloseacetat, Polydimethylsiloxan (PDMS), PSDM mit PC, Polysulfon mit PDMS oder Polyimid.

Im Kathodengehäuse der Erfindung kann Kathodenmaterial vorliegen, dass umfassen kann a) Manganoxid und/oder Mangandioxid als Kathodenmaterial umfasst, oder b) Manganoxid, insbesondere Manganoxid und/oder Mangandioxid, Platin, Platin-Basis, Silber einzeln oder gemeinsam als Katalysator.

Das Kathodenmaterial kann ferner umfassen 70 bis 95 Gew.-% in der Gesamtzusammensetzung von 100 Gew.-% des Kathodenmaterials Mangandioxid und auf 100 Gew.-% des Kathodenmaterials einen Kohlenstoff enthaltenden Leitfähigkeitsvermittler und optional weitere Additive umfasst, insbesondere umfasst die Kathode als Leitfähigkeitsvermittler Kohlenstoff enthaltende Partikel oder eine Kohlenstoff enthaltende Paste.

Ist die Kathode eine Luftkathode kann das Kathodenmaterial ggf. zusätzlich Silber als Katalysator umfassen, insbesondere nanopartikuläre Silberpartikel.

Das Anodenmaterial kann umfassen Silizium, insbesondere Silizium-Partikel, sowie Leitfähigkeitsvermittler, insbesondere umfasst der Leitfähigkeitsvermittler Kohlenstoff enthaltende Partikel oder eine Kohlenstoff enthaltende Paste. Im Anoden- oder Kathodenmaterial können die i) die Kohlenstoff enthaltenden Partikel umfassen Ruß, Leit-Ruß, elektrochemisch hergestellten Ruß, Graphit, Graphen und/oder ii) die Kohlenstoff enthaltende Paste kann elektrisch leitfähige Polymere und/oder Graphen als Kohlenstoff enthaltenden Leitfähigkeitsvermittler aufweisen.

Die Siliziumanode, insbesondere das Anodenmaterial oder die Anodenplatten umfassend Silizium können umfassen Dotierstoffe. Wobei die Dotierstoffe umfassen oder ausgewählt sind aus Elementen der 13. Hauptgruppe, insbesondere umfassend Bor, Indium, Aluminium und/oder Gallium, und aus Elementen der 15. Hauptgruppe, insbesondere umfassend Phosphor, Arsen und/oder Antimon und optional ausgewählt sind aus Elementen der Eisengruppe. Dabei ist es bevorzugt, wenn Silizium des Anodenmaterials Dotierstoffe umfasst, wobei die Dotierstoffe zu größer gleich 1 Element der 15. Hauptgruppe auf 10⁶ Silizium-Atome und/oder größer gleich 1 Element der 13. Hauptgruppe auf 10⁶ Silizium-Atome vorliegen.

Die Beschichtung oder die Zusammensetzung einer leitfähigen metallischen Legierung oder eines Metalls zur elektrischen Kontaktierung umfasst vorzugsweise Elemente der Gruppen 3 bis 11, vorzugsweise der Gruppen 8. bis 11., und besonders bevorzugt der Gruppen 3 bis 11 der IV, V und VI Periode des Periodensystems (Hauptgruppen 3 bis 11), besonders bevorzugt sind die Elemente der Gruppe 8. bis 11. und der V und VI Periode, bevorzugt sind Edelmetalle, umfassend Gold, Ruthenium, Rhodium, Osmium, Iridium, Platin und/oder Silber.

Nach bevorzugten Ausführungsformen kann die Anode Anodenplatten umfassen, die aus Silizium gebildet sind und umfassen können Silizium, insbesondere Siliziumpartikel, und optional Kohlenstoff und Silizium enthaltende Partikel und optional Partikel mindestens einer allotropen Kohlenstoffmodifikation, wobei die Siliziumpartikel, insbesondere die Silizium-Anode, einen Gehalt an Eisen von größer gleich 0,02 mg/kg, insbesondere größer gleich 0,01 mg/kg aufweist. Das Silizium der Anoden kann einen Gehalt an Eisen, Zink, Aluminium, Kohlenstoff, Calcium, optional Titan, optional Kupfer von jeweils größer gleich 0,01 mg/kg aufweisen. Das Silizium der Anoden kann amorph, mono- oder polykristallin vorliegen.

Die erfindungsgemäßen Silizium-Anodenplatten können vorzugsweise eine Dichte von 0,1 g/cm³ bis 2,2 g/cm³ aufweisen. Silizium-Anodenplatten oder generell Anodenplatten sind vorzugsweise ausgewählt aus Polyeder, Kugel, Kegel, insbesondere ausgewählt aus Prisma, Zylinder, Quader und Würfel.

Dabei ist es weiter besonders bevorzugt, wenn die Anode, insbesondere das Anodenmaterial, insbesondere im geladenen Zustand der Primärzelle, kein Lithium umfasst, vorzugsweise keine Lithium-Ionen im Konzentrationsbereich von größer gleich 10000 Gew-ppm, bevorzugt größer gleich 100 Gew.-ppm aufweist. Besonders bevorzugt weist das Anodenmaterial kleiner 10 Gew.-ppm Lithium-Atome auf. Vorzugsweise weist das Anodenmaterial kleiner 10²¹ Lithium-Atome/cm³ Silizium-Partikel auf. Des Weiteren ist es bevorzugt, wenn im Elektrolyten die Konzentration an Lithium, insbesondere Lithium-Ionen, kleiner gleich 10000 Gew.-ppm, insbesondere kleiner gleich 1000 Gew.-ppm, bevorzugt kleiner gleich 100 Gew.-ppm beträgt. Insbesondere weist das Anodenmaterial diesen Gehalt sowohl im geladenen Zustand als auch während der Entladung auf.

Des Weiteren ist es bevorzugt, wenn im Elektrolyten die Konzentration an Lithium, insbesondere Lithium-Ionen, kleiner gleich 10000 Gew.-ppm, insbesondere kleiner gleich 1000 Gew.-ppm, bevorzugt kleiner gleich 100 Gew.-ppm beträgt. Zudem ist es bevorzugt, wenn die Kathode, insbesondere das Kathodenmaterial unter 1000 Gew.-ppm Lithium enthält. Ferner ist es bevorzugt, wenn die Primärzelle umfassend Anode und Kathode sowie optional Elektrolyt, einen Gesamtgehalt an Lithium, insbesondere Lithium-Ionen, von kleiner gleich 5000 Gew.-ppm, bevorzugt kleiner 3000 Gew.-ppm, besonders bevorzugt kleiner 1000 Gew.-ppm enthält.

Gegenstand der Erfindung ist auch eine Anode, insbesondere umfassend einen Anodenstapel an einer Anodenhalterung und optional umfassend mindestens ein Gehäuseteil der Anode. Bevorzugt umfasst eine erfindungsgemäße Anode einen Anodenstapel von Anodenplatten, wobei die Anodenplatten jeweils parallel voneinander beabstandet vorliegen. Vorzugsweise sind die jeweils benachbarten Anodenplatten an ihren Vorder- und Rückseiten jeweils, im Wesentlichen parallel und/oder regelmäßig, voneinander beabstandet zu einem Anodenstapel angeordnet. Die Distanz zwischen den Vorder- und Rückseiten benachbarter Anodenplatten kann im Bereich von 1 mm bis 5 cm betragen, bevorzugt von 1 mm bis 10 mm. Des Weiteren ist es bevorzugt, wenn die flächigen Anoden, insbesondere Anodenplatten im Wesentlichen eine planare Vorder- und Rückseite aufweisen.

Entsprechend einer bevorzugten Ausführungsvariante umfasst das Silizium der Anode oder des Anodenmaterials, insbesondere die Silizium-Partikel, bevorzugt die kristallinen, polykristallinen oder amorphen Silizium-Partikel, des Anodenmaterials Dotierstoffe, wobei die Dotierstoffe ausgewählt sind aus Elementen der 13. Hauptgruppe, insbesondere umfassend Bor, Indium, Aluminium und/oder Gallium, und aus Elementen der 15. Hauptgruppe, insbesondere umfassend Phosphor, Arsen und/oder Antimon sowie Elemente der Eisengruppe, besonders bevorzugt sind Bor, Aluminium, Phosphor und/oder Eisen. Die Elemente der 13. Hauptgruppe (neue Nomenklatur: Gruppe 13 des Periodensystems) sind Elektronen-Akzeptoren neuer Nomenklatur. Als ElektronenDonatoren werden Elemente der 15. Hauptgruppe (neue Nomenklatur: Gruppe 15 des Periodensystems) eingesetzt. Nach einer Ausführungsform umfasst das Silizium, insbesondere die Silizium-Partikel des Anodenmaterials, Dotierstoffe, wobei die Dotierstoffe zu größer gleich 1 Element der 15. Hauptgruppe auf 10⁶ Silizium-Atome und/oder größer gleich 1 Element der 13. Hauptgruppe auf 10⁶ Silizium-Atome vorliegen, insbesondere größer gleich 1 Element der 15. Hauptgruppe auf 10⁴ Silizium-Atome und/oder größer gleich 1 Element der 13. Hauptgruppe auf 10⁴ Silizium-Atome, bestimmt mittels dem Fachmann bekannter ICP-MS Analyse (Inductive Plasma Discharge-Massenspektroskopie, welche unter Wikipedia ausführlich beschrieben ist: https://de.wikipedia.org/wiki/Massenspektrometrie_mit_induktiv_gekoppeltem_Plasma). Alternativ kann die Analyse auch durch GD-MS erfolgen (GDMS/GD-MS-Glimmentladungs-Massenspektroskopie mit Secondary Electron Multiplier- (SEM) und/oder Faraday-Detector gemäß Quelle:https://assets.thermofisher.com/TFS-Assets/CMD/brochures/BR-30066-GD-MS-ELEMENT-GD-PLUS-BR30066-EN.pdf). Den Farady-Detektor vorzugsweise für die Messungen von Spuren-Konzentrationen im %-Bereich.

Nach einer alternativen, bevorzugten Ausführungsform umfasst das Silizium, insbesondere die amorphen Silizium-Partikel des Anodenmaterials Dotierstoffe, wobei die Dotierstoffe größer gleich 10² Atome (ca. 100 Gew.-ppm, abhängig von Atomgewicht des Dotierstoffes) der 15. Hauptgruppe auf 10⁶ Silizium-Atome und/oder größer gleich 10² Atome der 13. Hauptgruppe auf 10⁶ Silizium-Atome vorliegen.

Nach weiteren bevorzugten, alternativen Ausführungsformen umfasst das Silizium, insbesondere die amorphen Silizium-Partikel, des Anodenmaterials Dotierstoffe, wobei die Dotierstoffe größer gleich 2*10² Atome der 15. Hauptgruppe auf 10⁶ Silizium-Atome größer gleich 2*10² Atome der 13. Hauptgruppe auf 10⁶ Silizium-Atome vorliegen. Die vorstehenden Gehalte an Dotierstoffen im Silizium des Anodenmaterials können inhomogen im Silizium verteilt sein, sowie die Gehalte integral über die Gesamtmenge des Siliziums im Anodenmaterial im Mittel vorliegen. Zur Bestimmung obiger Gehalte wird eine Prüfmenge von 1 g Prüfmenge mittels GD-MS oder ICPMS vermessen, wobei zwischen beiden Methoden gewisse Abweichungen bestimmt werden können, vorzugsweise wird ein Mittelwert bestimmt. Entsprechend weiteren bevorzugten, alternativen Ausführungsformen umfasst das Silizium, insbesondere die amorphen Silizium-Partikel, des Anodenmaterials Dotierstoffe, wobei die Dotierstoffe größer gleich 10⁴ Atome der 15. Hauptgruppe auf 10⁶ Silizium-Atome und/oder größer gleich 10⁴ Atome der 13. Hauptgruppe auf 10⁶ Silizium-Atome betragen.

Nach weiteren bevorzugten, alternativen Ausführungsformen umfasst das Silizium, insbesondere die amorphen Silizium-Partikel, des Anodenmaterials Dotierstoffe, wobei die Dotierstoffe größer gleich 10¹⁹ Atome der 15. Hauptgruppe auf 2*10²² Silizium-Atome und/oder größer gleich 10¹⁹Atome der 13. Hauptgruppe auf 2*10²² Silizium-Atome umfassen.

Die Silizium-Partikel können auf atomarer Ebene eine Legierung von Silizium mit mindestens einem Element der 13. oder 15 Hauptgruppe aufweisen, wobei das mindestens ein Element der 13. oder 15. Hauptgruppe ganz besonders bevorzugt mit größer gleich 10²¹ Atomen/cm³ vorliegt und ausgewählt aus mindestens einem Elektronendonator und Elektronenakzeptor ist. Dabei liegt die Legierung von Silizium auf atomarer Ebene mit mindestens einem Element der 13. oder 15. Hauptgruppe als eine amorphe oder kristalline Phase vor. Besonders bevorzugt weisen die Siliziumpartikel einen Gehalt an Bor von 10 ppm-Gew bis 2,5 Gew.-% in Bezug auf den Gesamtgehalt von 100 Gew.-% des Siliziumpartikels auf, bevorzugt ist ein Gehalt von 10 ppm-Gew bis 1,8, besonders bevorzugt von 1,8 Gew.-% plus/minus 0,2 Gew.-%. Analog kann die Siliziumfolie einen Gehalt an Bor von 10 ppm-Gew bis 1,8 Gew.-% in Bezug auf den Gesamtgehalt von 100 Gew.-% der Siliziumfolie aufweisen. Es wurde überraschend gefunden, dass die Legierungen von Silizium und Bor antikorrosiv wirken, so dass die Lebensdauer der Primärzelle verlängert wird. Ein besonders bevorzugtes Anodenmaterial kann Siridion^{®}-Black umfassen. Nach einer Alternative kann das Anodenmaterial umfassen Silizium enthaltende Partikel mit einem Gehalt an Kohlenstoff, insbesondere mit einem Gehalt von 1 bis kleiner 10 Gew.-% Kohlenstoff im Gesamtgehalt der Silizium-enthaltenden Partikel. Bevorzugte Anodenmaterialien können Gemische von Silizium Partikeln ohne Kohlenstoffgehalt und Silizium Partikel mit einem Kohlenstoffgehalt umfassen.

Gegenstand der Erfindung ist eine Silizium-Anode umfassend Siliziumpartikel, die einen Gehalt an Bor von 10 Gew.-ppm bis 1,8 Gew.-% aufweisen.

In der Primärzelle kann als Elektrolyt ein alkalischer, wässriger Elektrolyt, wie bspw. KOH, Polyalkylen, Alkalihydroxid, wie vorzugsweise 3 bis 4 mol/L KOH, 1 Gew.-% PEG 4000, in Wasser für die erfindungsgemäßen Silizium-Anoden gewählt.

Die Erfindung wird anhand der nachfolgenden Figuren näher erläutert, ohne die Erfindung auf die konkreten Ausführungsformen zu beschränken.

Es stellen dar:
- **Figur 1**: Explosionszeichnung einer erfindungsgemäßen Primärzelle **0**
- **Figur 2**: Schnittzeichnung - Seitenansicht Primärzelle **0** Draufsicht Anodenstapel **2** und seitliche Kathodengehäuse **5.3** und **5.4**
- **Figur 3**: Anode **A** mit Anodenstapel **2** sowie Anodenhalterung **14**
- **Figur 4**: Kathode **B** mit Kathodengehäuse **5.3/5.4** und Hohlraum **21**
- **Figur 5**: Separator **S** umfassend Rahmen **6.5** für Membran **6.3** und Membranhalterung **64**

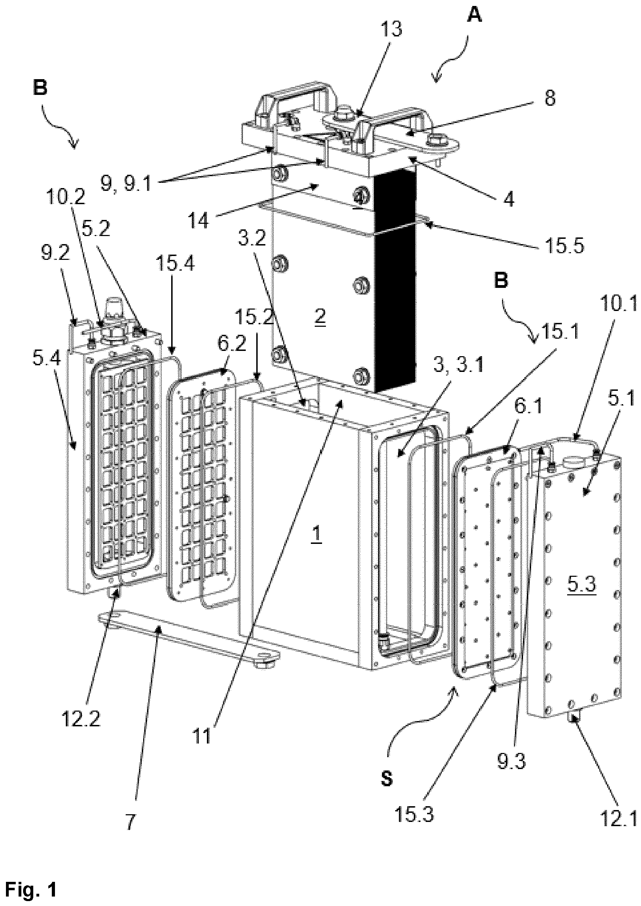

- **Figur 1**: zeigt eine erfindungsgemäße Primärzelle **0** als Explosionszeichnung sowie eine erfindungsgemäße Anode **A.** Die Anode **A** umfasst eine Anordnung von Komponenten, die die Anode bilden. So wird die Anode gebildet von einem Anodenstapel **2** von Anodenplatten **2.1,** der mittels einer Anodenhalterung **14** am Anodengehäuse **1** angeordnet wird. Der Anodenstapel **2** wird in eine Anodenöffnung **11** im Anodengehäuse **1** eingebracht. Die Anodenöffnung befindet sich auf der Oberseite des quaderförmigen Anodengehäuses. Des Weiteren weist das Anodengehäuse 1 zwei Kathodenöffnungen **3, 3.1** und **3.2** auf, die sich an Seitenflächen des Anodengehäuses **1** vorgesehen sind. Auf den Kathodenöffnungen **3.1** und **3.2** wird der Separator **S** und darauf das jeweilige Kathodengehäuse **5.3** und **5.4** angebracht. Sind Anode **A** und Kathoden **B** am Anodengehäuse **1** wie vorgesehen angeordnet, wird im Anodengehäuse ein Hohlraum zur Aufnahme von Elektrolyten ausgebildet.

Die einzelnen Baugruppen umfassend die Anode **A** und die Kathoden **B** werden nachfolgend detaillierter beschrieben.

Die Anode **A** umfasst einen Anodenstapel **2,** der mit der Anodenhalterung **14** am Gehäuseteil **4** der Anode **A** elektrisch leitend befestigt ist. Um den Gehäuseteil **4** fluiddicht auf an Anodenöffnung **11** anbringen zu können wird eine Dichtung **15**, insbesondere ein O-Ring, der Anode zur Abdichtung verwendet. Des Weiteren weist die Anode **A** einen Anodenanschluss **13** zur elektrisch leitenden Verbindung deines elektrischen Verbinder **8**, bspw. mit einer Stromschiene, der Primärzelle mit einer elektrischen Ableitung oder in einem Batteriestapel auf. An der Anode sind zudem Schläuche **9**, **9.1** für eine Belüftung - Zu-/Abluft -der Primärzelle vorgesehen. Insbesondere für eine Zu-/Ableitung von Inertgas (Argon und/oder N₂).

Die jeweilige Kathode **B** umfasst ein Kathodengehäuse **5.3/5.4** in den auf der dem Anodengehäuse zugewandten Seite jeweils eine Kathodenöffnung im Kathodengehäuse **5.4** vorgesehen ist. In die jeweilige Öffnung des Kathodengehäuses wird je eine Kontaktplatte eingesetzt oder aufgesetzt, auf der jeweils eine Dichtung **15.3**, insbesondere O-Ring, der Kathode rechts, und eine Dichtung **15.4**, insbesondere O-Ring, der Kathode links angeordnet wird. Auf diese Dichtungen werden die jeweiligen Membranen **6.1/6.2** mit Rahmen (Separator S) und darauf wiederum Dichtungen **15.1/15.2** angeordnet. Diese Zusammenstellung von Kathodengehäuse mit Separatoren **S** umfassend die Membranen **6.1/6.2** wird an den Kathodenöffnungen des Anodengehäuses **1** fluiddicht befestigt. Die Kathodengehäuse werden vorliegend gegenüberliegend an seitlichen Seitenflächen des Anodengehäuses fluiddicht (äußeres Gehäuse) fixiert.

Eine Kathode **B** umfasst somit Baugruppe einer kompletten Kathode **5.1/5.2** mit jeweils einem Kathodengehäuse **5.3/5.4** einer Kontaktplatte und Schläuchen für die Zuluft **9.2/9.3,** Schläuchen für die Abluft **10.1/10.2** der Luftkathode als auch die elektrischen Kontakte **12.1/12.2** elektrischen Verbinder **7** bspw. als Stromschien.

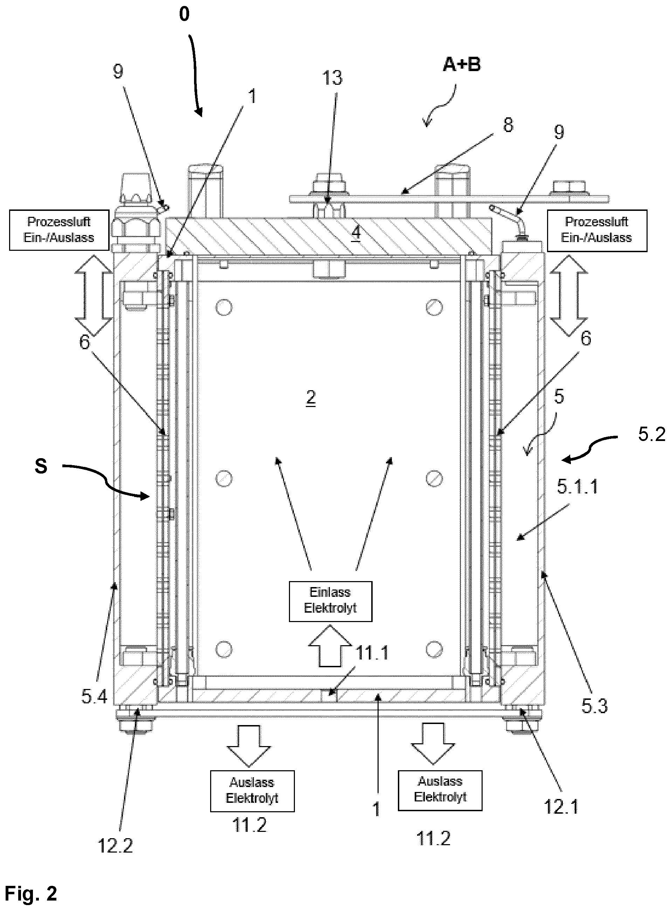

**Figur 2** stellt dar eine Schnittzeichnung der Seitenansicht Primärzelle **0** mit einer Draufsicht auf den Anodenstapel **2** und die seitlich am Anodengehäuse **1** angeordneten Kathoden, insbesondere Luftkathoden 5, seitliche Kathodengehäuse **5.3** und **5.4.** Die Membran mit Rahmen **6** als Separator **S** ist zwischen den beiden Kathodengehäusen und dem Anodengehäuse dargestellt. In dem jeweiligen Kathodengehäuse **5.2/5**.3 ist ein Hohlraum zur Aufnahme von Kathodenmaterial **5.1.1** vorgesehen. Oben an der Luftkathode **5** sind Schläuche **9** zur Versorgung der Luftkathode mit einem Sauerstoff enthaltendem Gas angebracht, die bis in die Kathodengehäuse hinein einen Gaszutritt ermöglichen. Im Anodengehäuse **1** sind am Boden, gegenüber der Anodenöffnung je mindestens ein Elektrolyteinlass **11.1** und Elektrolytauslass **11.2** vorgesehen, über die ein Austausch des im Anodenraum einzubringenden Elektrolyten während des Betriebes der Primärzelle möglich ist. Des Weiteren sind an den Kathodengehäusen **5.3/5.4** je ein Kathodenanschluss **12.1/12.2** (unten) und oben an der Anode A ein Anodenanschluss **13** mit elektrischem Verbinder **8** - hier Stromschiene - vorgesehen.

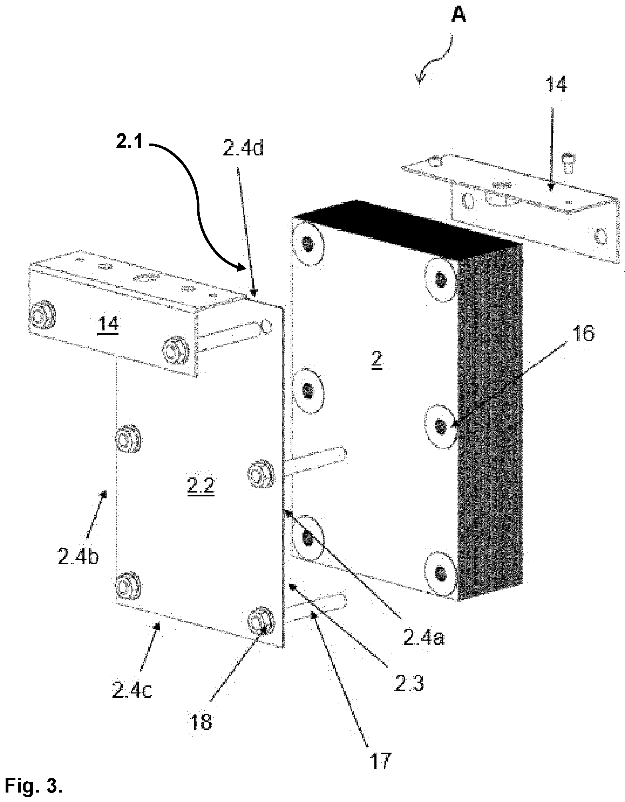

**Figur 3** zeigt eine Anode **A** mit Anodenstapel **2** sowie Anodenhalterung **14.** Erfindungsgemäß soll der Anodenstapel **2**, der einen Stapel Anodenplatten **2**, hier bevorzugt Silizium-Anodenplatten **2.1** zeigt, der mittels Fixierelementen **17/18** und zwischen den Anodenplatten angeordneten Abstandselementen **16** zu einem Anodenstapel angeordnet wird. Eine Anodenplatte **2.1** weist eine Vorderseite **2.2** eine Rückseite **2.3** und die die Vorder- und Rückseite verbindenden Seitenflächen **2.4a/2.4b/2.4c/2.4d** auf. Mit der Seitenfläche **2.4d** ist die Anodenplatte an der Innenseite der Anodenhalterung **14** fixiert und tritt mit dieser elektrisch leitend in Kontakt. Die Herstellung der elektrischen Kontaktierung kann zudem über an der Seitenfläche und der Innenseite der Anodenhalterung **14** stoffschlüssig mit diesen in Kontakt tretendem Lot, bspw. Weich- oder Hartlot erfolgen.

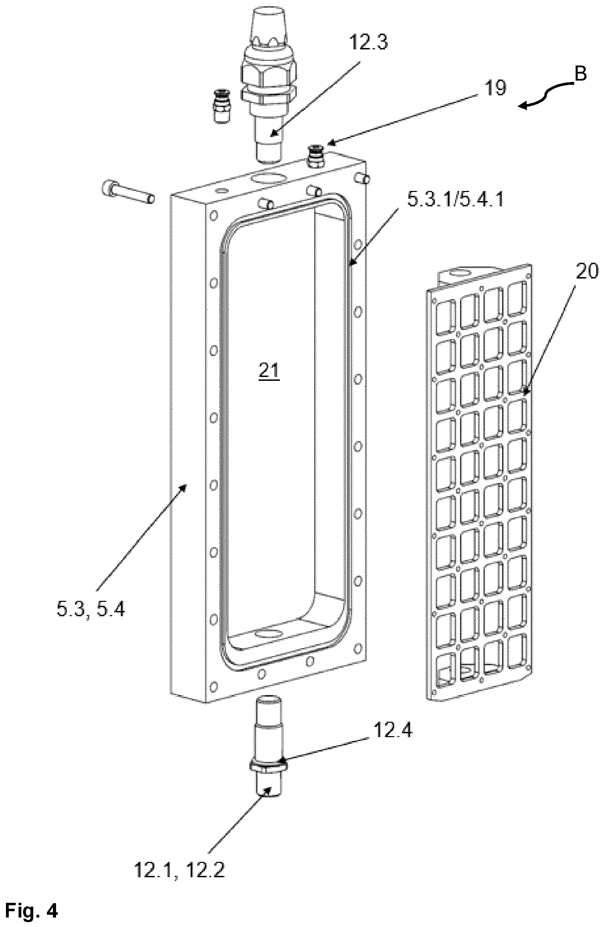

**Figur 4** Kathode **B** mit Kathodengehäuse **5.3/5.4** und Hohlraum **21** zur Aufnahme des Kathodenmaterials. Das Kathodengehäuse **5.3/5.4** weist eine Öffnung zum Zuführen und Ableiten von Gasen, vorzugsweise Sauerstoff-enthaltenden Gasen, wie Luft auf. An der Öffnung kann eine Gasleitung, wie ein Schlauch oder Rohr angebracht werden. Sowohl oben als auch unten ist im Kathodengehäuse 5.3/5.4 eine Öffnung vorgesehen in die ein Kathodenanschluss unten **12.1/12.2** und ein Kathodenanschluss oben **12.3** in das Kathodenmaterial zur elektrischen Leitung eingebracht ist. Die Kathodenanschlüsse weisen je eine Dichtung **12.4**, insbesondere einen O-Ring, auf. Auf die Kathodenöffnungen **5.3.1/5.4.1** der jeweiligen Kathodengehäuse **5.3/5.4** wird jeweils eine Kontaktplatte **20** aufgebracht. Die Kontaktplatte kann vorzugsweise mittels eines Kathodenanschlusses am Gehäuse befestigt werden.

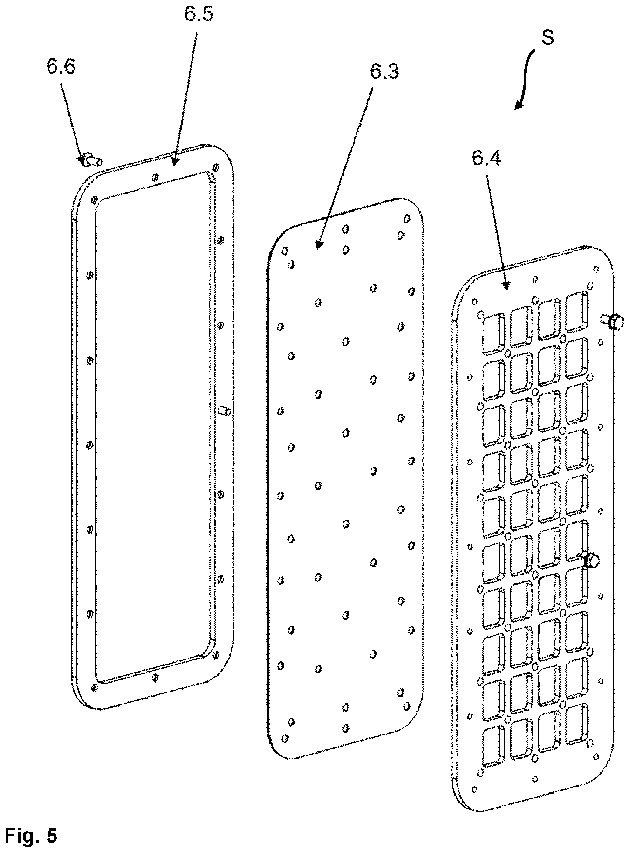

**Figur 5** stellt einen Separator **S** dar, der umfasst Rahmen **6.5** um eine Membran **6.3** und an einer Membranhalterung **6.4** mittels Befestigungsmittel **6.6**, hier bspw. Senkschrauben mit Innensechskant kann der Rahmen die Membran an der Membranhalterung fixieren. Alle vorgenannten Dichtungen können Silikondichtungen oder textile Dichtschnüre umfassen.

**Bezugszeichen:**
- **A**: Anode kpl.
- **B**: Kathode kpl.
- **S**: Separator (umfasst Membran 6, 6.1, Membranhalterung 6.4, (Baugruppe 6 bis 6.6)

- **1**: Gehäuse kpl. Anode
- **2**: Anodenstapel, Anodenanordnung in Form eines Stapels von Anodenplatten
- **2.1**: Anodenplatte
- **2.2**: Vorderseite Anodenplatte
- **2.3**: Rückseite Anodenplatte
- **2.4**: Seitenflächen die Vorder- und Rückseite verbinden (2.4a, 2.4b, 2.4c und/oder, 2.4d)
- **3**: Kathodenöffnung
- **3.1**: Kathodenöffnung
- **3.2**: Kathodenöffnung
- **4**: Gehäuseteil Anode
- **5**: Kathode, [Kathode kpl]. inkl. Gehäuse, Luftkathode
- **5.1**: Kathode kompl. inkl. Gehäuse
- **5.1.1**: Kathodenmaterial
- **5.2**: Kathode inkl. Gehäuse
- **5.3**: Kathodengehäuse, 5.3.1 Kathodenöffnung im Kathodengehäuse
- **5.4**: Kathodengehäuse, 5.4.1 Kathodenöffnung im Kathodengehäuse
- **6**: Membran mit Rahmen kpl.
- **6.1**: Membran mit Rahmen kpl.
- **6.2**: Membran mit Rahmen kpl.
- **6.3**: Membran
- **6.4**: Membranhalterung, insbesondere Platte mit Ausnehmung (Gitterplatte), [Platte innen Membran]
- **6.5**: zweiter Rahmen für Membran [1 Rahmen außen Membran]
- **6.6**: Befestigungsmittel [2 Senkschrauben m. Innensechskant]
- **7**: elektrischer Verbindern K. [Stromschiene kpl. Kathoden]
- **8**: elektrischer Verbinder Z. [Stromschiene kpl. zw. Zellen]
- **9**: Schlauch Zuluft
- **9.1**: Schlauch Zuluft
- **9.2**: Schlauch Zuluft
- **9.3**: Schlauch Zuluft
- **10**: Schlauch Abluft Kathode
- **10.1**: Schlauch Abluft Kathode
- **10.2**: Schlauch Abluft Kathode
- **11**: Anodenöffnung
- **11.1**: Elektrolyteinlass
- **11.2**: Elektrolytauslauss
- **12**: Kathodenanschluss
- **12.1**: Kathodenanschluss unten (eine von zwei Kathoden)
- **12.2**: Kathodenanschluss unten (andere von zwei Kathoden)
- **12.3**: Kathodenanschluss oben
- **12.4**: Dichtung [1 O-Ring]
- **13**: Anodenanschluss
- **14**: Anodenhalterung
- **15**: Dichtung, insbesondere O-Ring
- **15.1**: Dichtung, insbesondere O-Ring, der Kathode rechts
- **15.2**: Dichtung, insbesondere O-Ring, der Kathode links
- **15.3**: Dichtung, insbesondere O-Ring, der Kathode rechts
- **15.4**: Dichtung, insbesondere O-Ring, der Kathode links
- **15.5**: Dichtung, insbesondere O-Ring, der Anode
- **16**: Abstandselement
- **17**: erstes Fixierelement, insbesondere Bolzen
- **18**: zweites Fixierelement, insbesondere Sechskantmutter
- **19**: Öffnung Luft, Anschluss für Schlauch
- **20**: Kontaktplatte [1 Kontaktplatte Kathode]
- **21**: Hohlraum in Kathodengehäuse **5.3** bzw. **5.4**

## Patentansprüche

1. Primärzelle (0) umfassend Anode (A), Kathode (B) sowie mindestens einen Separator (S), wobei der Separator Anode (A) von Kathode (B) separiert, wobei eine Anode (A) in Form eines Anodenstapels (2) von Anodenplatten (2.1) vorliegt,
**dadurch gekennzeichnet, dass** die Kathode (B) eine Luftkathode ist.

2. Primärzelle nach Anspruch 1, **dadurch gekennzeichnet, dass** die Anodenplatten (2.1) Seitenflächen (2.2, 2.3, 2.4) aufweisen, die umfassen eine Vorderseite (2.2) und eine der Vorderseite gegenüberliegende Rückseite (2.3) sowie die Vorder- und Rückseite verbindende mindestens eine seitliche Seitenfläche (2.4).

3. Primärzelle nach Anspruch 1 oder 2, **dadurch gekennzeichnet, dass** die Anodenplatten (2.1) aus Silizium-Anodenplatten ausgwählt sind, wobei die Silizium-Anodenplatten umfassen
i) Silizium-Partikel,
ii) Trägergerüst gebildet aus stoffschlüssig miteinander verbundenen Silizium-Partikeln,
iii) Schwamm umfassend Silizium, und/oder
iv) dreidimensionalen Formkörper mit äußerer Oberfläche und innerer Oberfläche, wobei der dreidimensionale Formkörper umfasst Siliziumpartikel einer Partikelgröße von 1 nm bis 20 Mikrometer, wobei die Siliziumpartikel an Kontaktpunkten zu benachbarten Siliziumpartikeln stoffschlüssig miteinander verbunden sind.

4. Primärzelle nach Anspruch 2, **dadurch gekennzeichnet, dass**
a) eine Anodenplatte (2.1) auf mindestens einem Anteil seiner Seitenflächen eine elektrisch leitfähige Beschichtung aufweist, umfassend i) eine elektrisch leitfähige, metallische Legierung oder ein Metall zur elektrischen Kontaktierung, ii) ein elektrisch leitfähiges Polymer, iii) ein elektrisch leitfähiges Polymer umfassend Partikel oder Fasern von elektrisch leitenden Metallen oder Legierungen und/oder iv) elektrisch leitfähige Zusammensetzungen umfassend Kohlenstoff, v) Lot, und/oder
b) eine Anodenplatte (2.1) auf mindestens einem Anteil seiner Seitenflächen eine elektrisch leitfähige Zusammensetzung aufweist, wobei die Zusammensetzung umfasst i) elektrisch leitfähige, metallische Legierung oder ein Metall zur elektrischen Kontaktierung,
ii) elektrisch, leitfähiges Polymer, iii) elektrisch, leitfähiges Polymer umfassend Partikel oder Fasern von elektrisch leitendem Metall oder Legierung, iv) elektrisch leitfähige Zusammensetzung umfassend Kohlenstoff und/oder v) Lot.

5. Primärzelle nach Anspruch 3, **dadurch gekennzeichnet, dass** a) die Siliziumpartikel oder die b) stoffschlüssig miteinander verbundenen Silizium-Partikel und/oder c) die an Kontaktpunkten verbundenen Siliziumpartikel miteinander i) verschmolzen und/oder ii) versintert und/oder iii) verpresst sind.

6. Primärzelle nach einem der Ansprüche 1 bis 5, **dadurch gekennzeichnet, dass** die Primärzelle umfasst ein Anodengehäuse (1), in dem die Anode (A) angeordnet ist, wobei das Anodengehäuse (1) einen Elektrolyteinlass (11.1) und einen Elektrolytauslass (11.2) aufweist.

7. Primärzelle nach einem der Ansprüche 1 bis 5, **dadurch gekennzeichnet, dass** die Anode (A) umfasst einen Anodenstapel (2) aus Anodenplatten (2.1), welcher an einem Gehäuseteil (4) angeordnet ist.

8. Primärzelle nach einem der Ansprüche 1 bis 6, **dadurch gekennzeichnet, dass** das Anodengehäuse (1) mindestens eine Kathodenöffnung (3, 3.1, 3.2) aufweist, wobei an einer Kathodenöffnung je eine Kathode (B) angeordnet ist.

9. Primärzelle nach einem der Ansprüche 1 bis 8, **dadurch gekennzeichnet, dass** das Anodengehäuse (1) eine Anodenöffnung (11) zur Aufnahme der Anode (A) aufweist und auf der, der Anodenöffnung gegenüberliegenden Seite des Anodengehäuses mindestens einen Elektrolyteinlass (11.1) und/oder mindestens einen Elektrolytauslass (11.2) aufweist.

10. Primärzelle nach einem der Ansprüche 1 bis 9, **dadurch gekennzeichnet, dass** die Primärzelle gebildet wird durch ein Anodengehäuse (1) mit Anodenöffnung (11) zur Aufnahme der Anode (A) und, wobei insbesondere auf der, der Anodenöffnung gegenüberliegenden Seite des Anodengehäuses mindestens ein Elektrolyteinlass (11.1) und mindestens ein Elektrolytauslass (11.2) ist, wobei das Anodengehäuse mindestens zwei Kathodenöffnungen (3, 3.1, 3.2) aufweist, wobei an je einer Kathodenöffnung je eine Kathode (B) angeordnet ist.

11. Primärzelle nach einem der Ansprüche 1 bis 10, **dadurch gekennzeichnet, dass** die Luftkathode umfasst ein Kathodengehäuse (5.3, 5.4), mindestens einen Kathodenanschluss (12, 12.1, 12.2, 12.3), Öffnung für Austausch Gas umfassend Sauerstoff, und wobei das Kathodengehäuse mindestens drei Seitenflächen aufweist, wobei eine Seitenfläche des Kathodengehäuses mindestens eine Kathodenöffnung (5.3.1, 5.4.1) aufweist, auf der eine Kontaktplatte (20) anordnenbar ist oder die mit einer Kontaktplatte als Teil des Kathodengehäuses (20) versehen ist.

12. Primärzelle nach einem der Ansprüche 1 bis 11, **dadurch gekennzeichnet, dass** die Primärzelle umfasst ein Anodengehäuse (1) in dem die mindestens eine Anode (A) angeordnet ist und an dem mindestens zwei Kathoden (B), insbesondere zwei Luftkathoden (B) angeordnet sind.

13. Primärzelle nach einem der Ansprüche 1 bis 12, **dadurch gekennzeichnet, dass** die Anode (A) in der Anodenöffnung (11) des Anodengehäuses (1) und die Kathoden (B) an den Kathodenöffnungen (3, 3.1, 3.2) des Anodengehäuses (1) fluiddicht angeordnet sind.

14. Primärzelle nach einem der Ansprüche 1 bis 12, **dadurch gekennzeichnet, dass** der Separator zwischen dem Anodengehäuse (1) und den Kathodengehäusen (5.3, 5.4) angeordnet ist,

15. Mehrzellige Batterie, **dadurch gekennzeichnet, dass** die Batterie mindestens zwei bis 15000 mit einander verbundene Primärzellen nach einem der Ansprüche 1 bis 14 umfasst, vorzugsweise sind die zwei bis 15000 miteinander verbundenen Primärzellen in Serie geschaltet.

16. Anode für eine Primärzelle, insbesondere nach einem der Ansprüche 1 bis 15, **dadurch gekennzeichnet, dass** sie umfasst einen Anodenstapel an einer Anodenhalterung und optional umfassend mindestens ein Gehäuseteil der Anode.
